# FASCICULE DE BREVET EUROPEEN

(11) **EP 1 820 979 B1**
(45) Date de publication et mention de la délivrance du brevet: **03.09.2008**
(21) Numéro de dépôt: 06291828.9
(22) Date de dépôt: 28.11.2006
(51) Int. Cl.: F16B 37/04

(54) **Dispositif de fixation d'un tourillon sur un corps de vérin, et vérin avec tourillon fixé par un tel dispositif**
Befestigungsvorrichtung für einen Zapfen auf einem Zylinder, und Zylinder mit einem Zapfen durch diese Vorrichtung befestigt
Device for fixing a trunnion on a cylinder, and cylinder with a trunnion fixed by this device

(30) Priorité: 21.02.2006 FR 0601503
(43) Date de publication de la demande: 22.08.2007
(73) Titulaire: Asco Joucomatic SA, 92500 Rueil Malmaison (FR)
(72) Inventeur: Alonso, Andrés, 39700 Castro-Urdiales (ES); Cardoso, Faustino, 39700 Castro-Urdiales (ES); Cerro, Ataulfo, 39700 Castro-Urdiales (ES); Gonzalez, German, 39700 Castro-Urdiales (ES); Hierro, Lorena, 39700 Castro-Urdiales (ES); Madrazo, Eduardo, 39700 Castro-Urdiales (ES)
(74) Mandataire: Michardière, Bernard

(56) Documents cités:
- EP-A- 0 767 313
- EP-A- 0 911 533
- EP-A- 1 227 251
- DE-U1- 29 616 332
- GB-A- 2 191 840

## Description

L'invention est relative à un dispositif de fixation d'un tourillon sur un corps de vérin, entre deux blocs d'extrémité du vérin, le corps de vérin comportant un alésage intérieur cylindrique pour le coulissement d'un piston et, sur sa paroi extérieure, au moins deux rainures longitudinales parallèles à l'axe géométrique du corps et diamétralement opposées, chaque rainure présentant une section transversale partiellement refermée avec deux rebords d'accrochage parallèles longitudinaux.

L'invention concerne plus particulièrement, mais non exclusivement un dispositif de fixation de tourillon pour vérin pneumatique, à tige ou sans tige.

Le corps de vérin est constitué par un élément tubulaire dont l'alésage cylindrique débouche à chaque extrémité longitudinale, fermée par un bloc constituant un fond du vérin. Dans de nombreuses applications, il est important de pouvoir détecter la position du piston à l'intérieur du vérin et, pour cela, on prévoit sur la paroi extérieure du corps de vérin au moins deux rainures longitudinales pour le montage réglable d'un élément de détection de la position du vérin. Généralement, la paroli extérieure du corps de vérin comporte quatre rainures décalées angulairement de 90° autour de l'axe géométrique du vérin. Le montage du vérin est assuré à l'aide de tourillons fixés sur le corps de vérin, entre les deux extrémités du corps, de préférence de manière réglable longitudinalement. Les tourillons permettent d'assurer une rotation du vérin, nécessaire dans de nombreuses applications. Les tourillons sont diamétralement opposés et alignés de part et d'autre du corps de vérin.

La fixation des tourillons sur le corps de vérin, avec possibilité de réglage suivant la direction de l'axe du vérin, demande à être améliorée.

Une solution, couramment utilisée, consiste à prévoir une sorte de cadre engagé autour du corps du vérin et comportant sur deux côtés parallèles les deux tourillons opposés. La fixation du cadre sur le corps de vérin est assurée à l'aide de vis de serrage prenant appui contre le corps du vérin. Cette solution, tout en étant relativement simple à mettre en oeuvre, présente l'inconvénient d'engendrer des déformations du corps de vérin et de l'alésage dans lequel coulisse le piston.

EP 0 911 533 présente un dispositif de fixation d'un raccord hydraulique sur un corps comprenant deux rainures longitudinales parallèles à l'axe géométrique du corps et diamétralement opposées.

Le dispositif comprend par ailleurs un patin pouvant être engagé dans l'une des rainures par rotation du dispositif autour d'un axe orthogonal à la rainure, et un téton, faisant saillie à l'extrémité du patin, s'engageant dans un orifice prévu en fond de rainure bloquant le coulissement du dispositif dans la rainure.

L'invention a pour but, surtout, de fournir un dispositif de fixation de tourillon qui évite, ou tout au moins diminue considérablement, les déformations de l'alésage du cylindre du corps de vérin.

Selon l'invention, un dispositif de fixation d'un tourillon sur un corps de vérin, notamment pneumatique, du genre défini précédemment, est caractérisé en ce qu'il comprend :
- un lardon présentant un patin de section complémentaire de celle d'une rainure pour pouvoir y être engagé à coulissement, tout en étant arrêté en rotation, et un fût solidaire du patin pour faire saillie hors de la rainure,
- et une pièce de serrage munie du tourillon propre à être montée sur le fût,
des moyens de liaison conjugués étant prévus entre le lardon et la pièce de serrage pour permettre de serrer les rebords de la rainure entre le patin du lardon et la pièce de serrage, et bloquer ainsi le tourillon et le lardon relativement au corps de cylindre.

De préférence, le fût du lardon présente une paroi extérieure cylindrique lisse et comporte un trou axial taraudé dont le filetage constitue le moyen de liaison du lardon, tandis que la pièce de serrage comporte un alésage propre à s'ajuster sur le fût du lardon et à être traversé par une vis de serrage, constituant le moyen de liaison conjugué de la pièce de serrage, propre à coopérer avec le trou taraudé du lardon et la pièce de serrage pour le blocage de l'ensemble sur les rebords de la rainure.

La pièce de serrage peut comporter une collerette d'embase propre à s'appuyer sur les bords extérieurs de la rainure.

Le fût du lardon et la pièce de serrage sont de préférence cylindriques de révolution.

La rainure du corps de vérin peut être une rainure à section transversale en queue d'aronde, ou en T, ou peut être une double rainure, dans tous les cas le patin du lardon étant adapté à la section de la rainure.

L'invention concerne également un vérin, notamment pneumatique, à tige ou sans tige, comportant un corps de vérin ayant un alésage intérieur cylindrique et présentant sur sa paroi extérieure au moins deux rainures longitudinales parallèles à l'axe géométrique du corps et diamétralement opposées, chaque rainure présentant une section transversale partiellement refermée avec deux rebords d'accrochage, le vérin étant équipé d'au moins deux tourillons diamétralement opposés fixés sur le corps entre les extrémités du corps, caractérisé en ce que la fixation de chaque tourillon est assurée par un dispositif de fixation tel que défini précédemment.

Généralement le vérin comporte sur la paroi extérieure de son corps quatre rainures diamétralement opposées deux à deux et décalées de 90° ; deux rainures opposées servent à fixer les tourillons, et au moins l'une des deux autres rainures est équipée d'un dispositif de détection de la position du piston dans le corps de vérin.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig. 1 est une vue en perspective d'un vérin pneumatique équipé de deux tourillons montés avec un dispositif de fixation selon l'invention.
Fig. 2 est une vue en perspective d'une section de corps de vérin comportant des rainures avec profils différents, et, à plus grande échelle en perspective, deux lardons correspondant à deux de ces rainures.
Fig. 3 est une vue en perspective partielle d'une section du corps de vérin et d'un lardon pour un autre profil de rainure.
Fig. 4 montre en perspective, sous un autre angle, une section du corps de vérin avec un lardon sur le point d'être engagé dans l'une des rainures.
Fig. 5 est une vue partielle en perspective, sous un autre angle, d'une section du corps de vérin équipée d'un lardon sur lequel va être mise en place la bague de serrage et une vis de blocage.
Fig. 6 est une section transversale partielle, à plus grande échelle, du corps de vérin équipé d'un tourillon selon l'invention.
Fig. 7 est une section transversale partielle, semblable à Fig. 6, illustrant la fixation d'un tourillon sur une rainure de profil différent.
Fig. 8 montre, semblablement à Fig. 6, la fixation du tourillon sur une double rainure, et
Fig. 9 est une vue en perspective d'un vérin sur lequel est installé un outillage d'alignement de tourillons diamétralement opposés.

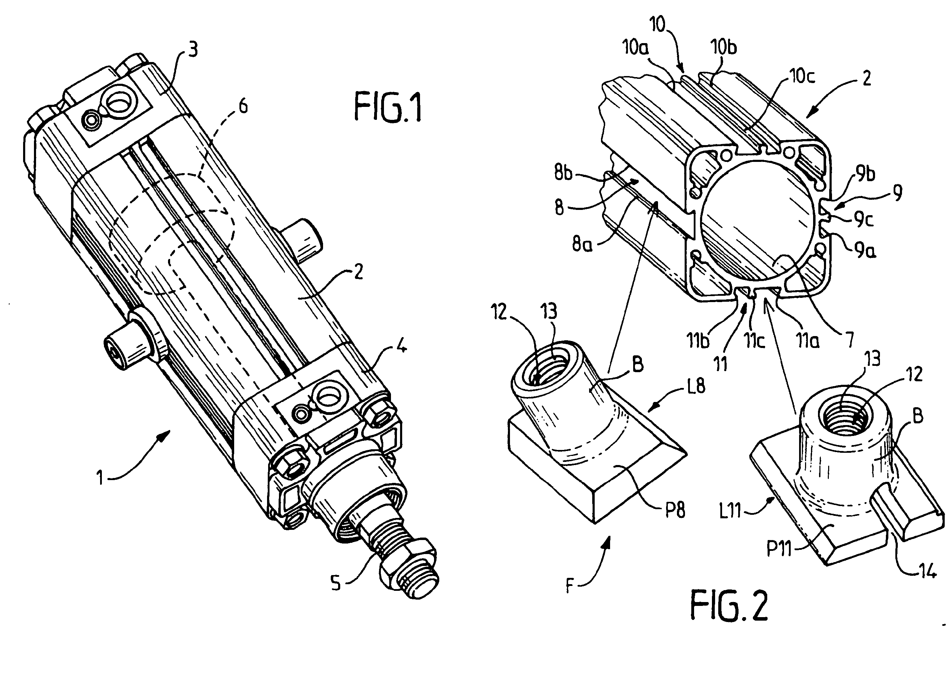

En se reportant à Fig. 1, on peut voir un vérin pneumatique 1 constitué d'un corps de vérin 2 et de deux blocs d'extrémité 3, 4 constituant des fonds de vérin. L'un des blocs 3 est fermé, l'autre bloc 4 est traversé par une tige 5 de vérin qui s'étend à l'intérieur du corps de vérin jusqu'à un piston 6. Les blocs d'extrémité 3, 4 sont serrés de manière étanche contre le corps 2 par des moyens appropriés. Des orifices d'admission/échappement d'un fluide sous pression sont prévus dans les blocs 3 et 4.

Bien que le vérin représenté sur Fig.1 comporte une tige, l'invention s'applique à d'autres types de vérins, notamment des vérins sans tige dont les deux blocs d'extrémité sont fermés.

Le corps de vérin 2, dont une portion est illustrée sur Fig. 2, comporte un alésage intérieur cylindrique 7 pour le coulissement du piston et, sur sa paroi extérieure, au moins deux rainures longitudinales 8, 9 parallèles à l'axe géométrique du corps et diamétralement opposées.

Comme visible sur Fig. 2, le contour de la paroi extérieure du corps de vérin est carré avec des angles arrondis. La paroi extérieure a ainsi une forme prismatique présentant quatre faces planes, chaque face comportant dans sa région médiane une rainure longitudinale 8, 9 et 10, 11.

Chaque rainure 8-11 présente une section transversale partiellement refermée avec deux rebords d'accrochage 8a, 8b, 9a, 9b, 10a, 10b et 11 a, 11 b.

Les sections des différentes rainures d'un même corps de vérin peuvent être identiques ou différentes comme illustré sur Fig. 2. La rainure 8 a une section transversale en queue d'aronde tandis que les rainures 9,10,11 sont des rainures doubles. La rainure 9 est formée de deux rainures en T adjacentes séparées par une nervure centrale 9c dont l'arête extérieure est plus large pour former deux rebords. La rainure double 10 est composée d'une rainure en queue d'aronde dont un côté est limité par le rebord 10a et d'une rainure adjacente en T limitée, d'un côté, par le rebord 10b. Une nervure 10c sépare les deux rainures, cette nervure complétant du côté tourné vers le rebord 10a le profil en queue d'aronde et de l'autre côté, tourné vers le rebord 10b, le profil en T.

Un dispositif de fixation F d'un tourillon A sur le corps de vérin 1 est prévu et comprend un lardon Ln, c'est-à-dire une pièce propre à être insérée dans une rainure correspondante du corps de vérin.

Sur Fig. 2 on a représenté, à plus grande échelle que celle du corps de vérin, un lardon L8 propre à coopérer avec la rainure 8 en queue d'aronde. Ce lardon L8 présente un patin P8 de section transversale complémentaire de celle de la rainure 8 en queue d'aronde de manière à pouvoir y être engagé à coulissement ajusté, en étant empêché de tourner. Le lardon L8 comporte en outre un fût B solidaire du patin P8 pour faire saillie hors de la rainure 8. L'axe géométrique du fût B est orthogonal au plan moyen du patin P8. Le fût B présente une paroi extérieure cylindrique de révolution et comporte un trou axial 12 taraudé dont le filetage 13 constitue un moyen de liaison.

Sur Fig. 2, un autre lardon L11 a été représenté, également à plus grande échelle, pour coopérer avec la rainure double 11 semblable à la rainure double 10. Le patin P11 du lardon L11 comporte deux parties dont les sections sont complémentaires respectivement des deux parties de la rainure 11. Les deux parties du patin sont séparées par une fente 14 dans laquelle s'engage la nervure 11c.

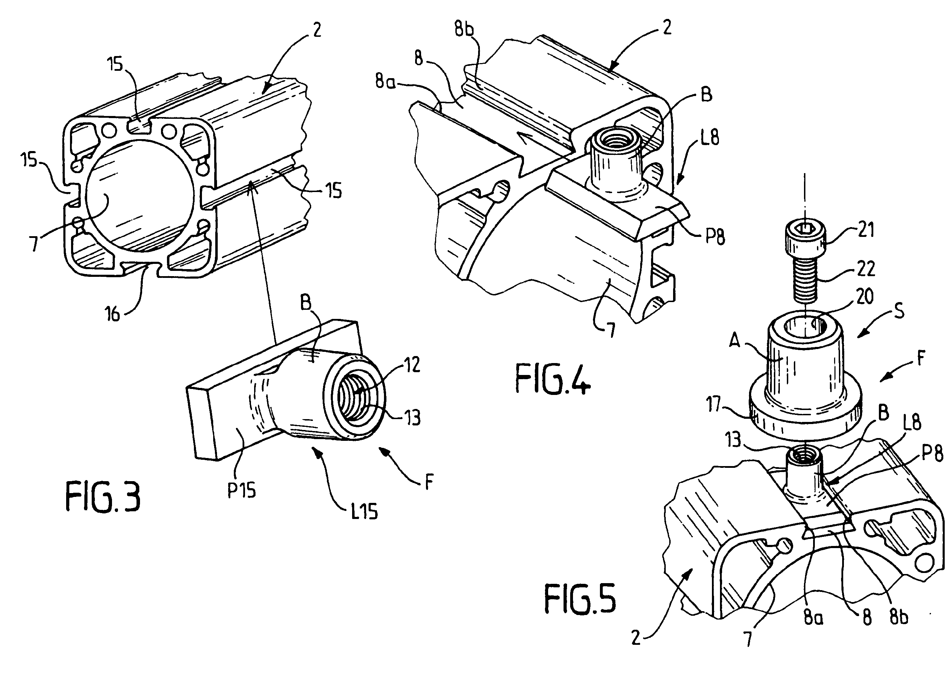

Fig. 3 illustre une variante de réalisation du corps de vérin comportant sur trois faces une rainure 15 à section transversale en T et sur la dernière face une rainure 16 à section en queue d'aronde. Le lardon L15 prévu pour coopérer avec la rainure 15 a été représenté, à plus grande échelle, avec un patin P15 de section complémentaire de celle de la rainure 15.

Fig. 4 illustre la mise en place du lardon L8 dans la rainure 8 de Fig.2, le corps de vérin ayant subi une rotation d'un quart de tour autour de son axe géométrique.

Le dispositif de fixation F comprend en outre une pièce de serrage S munie du tourillon A comme illustré sur Fig. 5. La pièce de serrage S est propre à être montée sur le fût B du lardon associé, L8 dans l'exemple de Fig. 5.

La pièce de serrage S comporte une collerette d'embase 17 circulaire propre à s'appuyer contre les bords extérieurs de la rainure, 8 dans l'exemple considéré. Le tourillon A est constitué par une surface cylindrique de révolution d'une seule pièce avec la collerette 17.

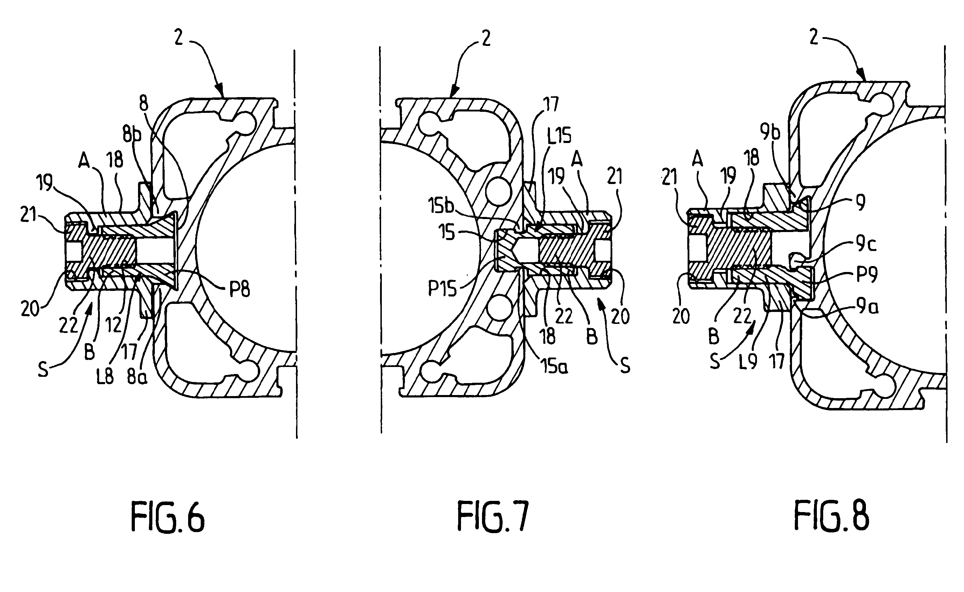

La pièce de serrage S comporte un alésage 18 (voir Fig. 6-8) propre à s'ajuster sur la surface cylindrique externe du fût B. Un épaulement 19 en saillie radiale vers l'intérieur est prévu à l'extrémité de l'alésage 18 éloignée de la collerette 17. Un alésage 20, de plus grand diamètre que l'alésage 18, est prévu du côté de l'épaulement 19 opposé à la collerette 17 pour s'ouvrir vers l'extérieur. Cet alésage 20 sert de logement à une tête 21 cylindrique, à trou borgne central hexagonal, d'une vis 22 qui traverse l'épaulement 19 et dont le filetage vient coopérer avec le taraudage du fût B. La vis 22 constitue un moyen de liaison conjugué du trou taraudé 12.

Fig. 6 illustre la fixation dans la rainure 8 en queue d'aronde.

Fig. 7 illustre la fixation dans une rainure 15 à section en T tandis que Fig. 8 illustre la fixation du tourillon A sur une rainure double 9, les références numériques utilisées dans les figures précédentes étant reprises sans qu'il soit nécessaire d'explications complémentaires.

Ceci étant, le montage et la fixation des tourillons sur le corps de vérin s'effectuent de la manière suivante.

Avant que le corps de vérin 2 ne soit équipé de ses fonds 3, 4 (Fig.1) qui ferment l'accès aux rainures telles que 8, l'opérateur introduit, par exemple, dans la rainure 8 (Fig.4 et 5) le patin P8 du lardon B8 correspondant. La pièce de serrage S est alors engagée sur le fût B comme illustré sur Fig. 5. La vis 22 est introduite dans l'alésage 18 de la pièce de serrage et est vissée dans le trou taraudé 12 du lardon. La collerette 17 est approchée de la paroi extérieure du corps 2 de vérin sans être serrée contre cette paroi de telle sorte que l'ensemble du lardon et de la pièce de serrage S avec le tourillon A peut coulisser suivant la direction longitudinale de la rainure 8, pour un réglage de position.

L'opérateur effectue une opération semblable pour le montage du lardon approprié et de la bague de serrage dans la rainure diamétralement opposée à la rainure 8.

Les deux tourillons A disposés de part et d'autre du corps de vérin 2 sont positionnés à l'endroit souhaité. Leur alignement peut être assuré en rendant égale la distance de l'axe géométrique de chaque tourillon à une extrémité du corps de vérin.

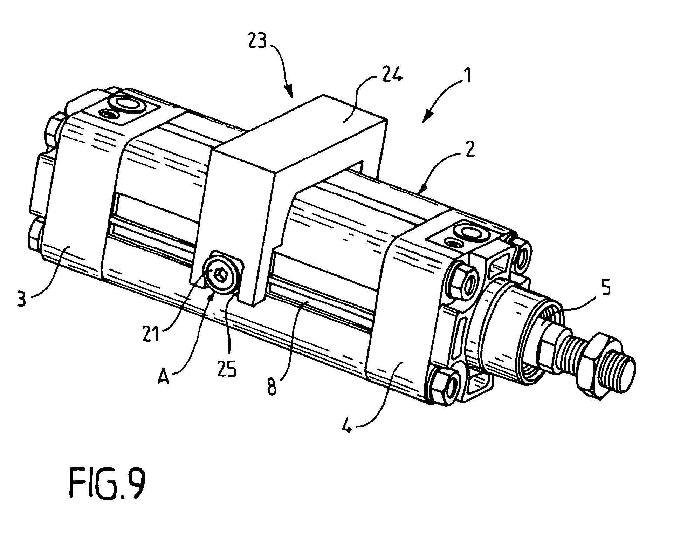

Avantageusement, comme illustré sur Fig. 9, on prévoit un outillage 23 d'alignement constitué par une pièce 24 en U dont les branches viennent encadrer le corps de vérin 2. Les extrémités des branches comportent des ouvertures 25 alignées présentant deux faces parallèles écartées d'une distance égale au diamètre du tourillon A sur lequel elles viennent s'ajuster. L'engagement des deux ouvertures 25 sur les tourillons A diamétralement opposés permet d'être assuré de l'alignement des axes géométriques des tourillons.

Lorsque cet alignement est réalisé, l'opérateur procède au serrage des vis 22 dans les trous taraudés 12 de sorte que les bords des rainures sont pincés entre le patin du lardon engagé dans la rainure et la collerette 17 de la pièce de serrage qui appuie contre la paroi extérieure du corps de vérin.

Les tourillons A sont ainsi bloqués sur le corps de vérin. Les efforts de serrage exercés sur les bords des rainures sont sans effet sur l'alésage 7 du corps de vérin qui ne subit aucune déformation due à la fixation du tourillon.

Les rainures prévues dans les autres faces du corps de vérin 2, qui ne sont pas utilisées pour le montage des tourillons A peuvent servir à la fixation réglable de moyens de détection, par exemple un capteur magnétique, de la position du piston 6 dans l'alésage du corps de vérin.

Bien que la solution du corps de vérin muni d'une rainure sur chacune de ses quatre faces extérieures soit préférée, l'invention conserve son intérêt pour un corps de vérin dont la paroi extérieure ne comporterait que deux rainures diamétralement opposées. Dans ce cas, il serait possible d'installer dans une même rainure le tourillon et un moyen de détection de la position du piston, dans la mesure où le tourillon A laisserait libre la position souhaitée pour le moyen de détection.

Après fixation des tourillons, les blocs d'extrémité 3 et 4 du vérin sont mis en place et le vérin est prêt à l'utilisation. Bien entendu, il est possible de mettre en place les blocs d'extrémité avant blocage des tourillons A dans la position souhaitée.

Après mise en place des blocs 3 et 4, la position des tourillons A suivant la direction de l'axe du vérin peut être modifiée aisément.

L'invention permet une fixation simple, rapide et précise des tourillons A, sans engendrer de déformations de l'alésage du corps de vérin.

## Revendications

1. Dispositif de fixation d'un tourillon (A) sur un corps de vérin, notamment pneumatique, entre deux blocs d'extrémité du vérin, le corps de vérin (2) comportant un alésage intérieur cylindrique pour le coulissement d'un piston et, sur sa paroi extérieure, au moins deux rainures longitudinales (8,9,10,11) parallèles à l'axe géométrique du corps et diamétralement opposées, chaque rainure présentant une section transversale partiellement refermée avec deux rebords d'accrochage parallèles longitudinaux, **caractérisé en ce qu'**il comprend :
- un lardon (L8, L9, L11, L15) présentant un patin (P8, P9, P11, P15) de section complémentaire de celle d'une rainure (8,9,11,15) pour pouvoir y être engagé à coulissement, tout en étant arrêté en rotation, et un fût (B) solidaire du patin pour faire saillie hors de la rainure,
- et une pièce de serrage (S) munie du tourillon (A), propre à être montée sur le fût (B),
des moyens de liaison conjugués (13, 22) étant prévus entre le lardon et la pièce de serrage pour permettre de serrer les rebords de la rainure entre le patin du lardon et la pièce de serrage, et bloquer ainsi le tourillon et le lardon relativement au corps de cylindre.

2. Dispositif de fixation selon la revendication 1, **caractérisé en ce que** le fût (B) du lardon présente une paroi extérieure cylindrique lisse et comporte un trou axial taraudé(12) dont le filetage (13) constitue le moyen de liaison du lardon, tandis que la pièce de serrage (S) comporte un alésage (18) propre à s'ajuster sur le fût (B) du lardon et à être traversé par une vis de serrage (22), constituant le moyen de liaison conjugué de la pièce de serrage, propre à coopérer avec le trou taraudé du lardon et la pièce de serrage pour le blocage de l'ensemble sur les rebords de la rainure.

3. Dispositif de fixation selon la revendication 2, **caractérisé en ce que** la pièce de serrage (S) comporte une collerette (17) d'embase propre à s'appuyer sur les bords extérieurs de la rainure.

4. Dispositif de fixation selon la revendication 3, **caractérisé en ce que** le tourillon (A) est constitué par une surface cylindrique de révolution d'une seule pièce avec la collerette (17).

5. Dispositif de fixation selon l'une des revendications précédentes, **caractérisé en ce que** le fût (B) du lardon et la pièce de serrage (S) sont cylindriques de révolution.

6. Dispositif de fixation selon l'une des revendications précédentes, **caractérisé en ce que** la rainure du corps de vérin est une rainure à section transversale en queue d'aronde (8, 16), ou en T (15), ou une double rainure (9,10,11), le patin du lardon étant adapté à la section de la rainure.

7. Vérin, notamment pneumatique, à tige ou sans tige, comportant un corps de vérin (2) ayant un alésage intérieur cylindrique (7) et présentant sur sa paroi extérieure au moins deux rainures longitudinales (8,9) parallèles à l'axe géométrique du corps et diamétralement opposées, chaque rainure présentant une section transversale partiellement refermée avec deux rebords d'accrochage, le vérin étant équipé d'au moins deux tourillons (A) diamétralement opposés fixés sur le corps entre les extrémités du corps, **caractérisé en ce que** la fixation de chaque tourillon est assurée par un dispositif de fixation (F) selon l'une des revendications 1 à 6.

8. Vérin selon la revendication 7, **caractérisé en ce qu'**il comporte sur la paroi extérieure de son corps quatre rainures (8,9 ; 10,11) diamétralement opposées deux à deux et décalées de 90°, deux rainures opposées servent à fixer les tourillons (A), et au moins l'une des deux autres rainures étant équipée d'un dispositif de détection de la position du piston dans le corps de vérin.

## Claims

1. Device for fixing a trunnion (A) on a cylinder body, in particular pneumatic, between two end blocks of the cylinder, the cylinder body (2) comprising a cylindrical internal bore for the sliding of a piston and, on its external wall, at least two longitudinal grooves (8, 9, 10, 11) parallel to the geometric axis of the body and diametrically opposed, each groove having a partially closed transverse section with two longitudinal parallel attachment rims, **characterised in that** it comprises:
- a nut (L8, L9, L11, L15) having a shoe (P8, P9, P11, P15) with a cross section complementary to that of a groove (8, 9, 11, 15) in order to be able to be engaged therein slidably, while being stopped rotationally, and a barrel (B) secured to the shoe in order to project out of the groove,
- and a clamping piece (S) provided with the trunnion (A), able to be mounted on the barrel (B),
- conjugate connection means (13, 22) being provided between the nut and the clamping piece for clamping the rims of the groove between the nut shoe and the clamping piece, and thus locking the trunnion and nut relative to the cylinder body.

2. Fixing device according to claim 1, **characterised in that** the barrel (B) of the nut has a smooth cylindrical external wall and comprises a threaded axial hole (12), the thread (13) of which constitutes the connection means of the nut, while the clamping piece (S) comprises a bore (18) able to fit on the barrel (B) of the nut and to have a clamping screw (22) pass through it, constituting the conjugate connection means of the clamping piece, able to cooperate with the threaded hole in the nut and the clamping piece for locking the assembly on the rims of the groove.

3. Fixing device according to claim 2, **characterised in that** the clamping piece (S) comprises a base collar (17) able to bear on the external edges of the groove.

4. Fixing device according to claim 3, **characterised in that** the trunnion (A) is formed by a cylindrical surface of revolution in a single piece with the collar (17).

5. Fixing device according to one of the preceding claims, **characterised in that** the barrel (B) of the nut and the clamping piece (S) are cylindrical of revolution.

6. Fixing device according to one of the preceding claims, **characterised in that** the groove in the cylinder body is a groove with a dovetail transverse section (8, 16), or in a T (15), or a double groove (9, 10, 11), the nut shoe being adapted to the cross-section of the groove.

7. Cylinder, in particular pneumatic, with rod or without rod, comprising a cylinder body (2) having a cylindrical internal bore (7) and having on its external wall at least two longitudinal grooves (8, 9) parallel to the geometric axis of the body and diametrically opposed, each groove having a partially closed transverse section with two attachment rims, the cylinder being equipped with at least two diametrically opposed trunnions (A) fixed to the body between the ends of the body, **characterised in that** each trunnion is fixed by a fixing device (F) according to one of claims 1 to 6.

8. Cylinder according to claim 7, **characterised in that** it comprises, on the external wall of its body, four grooves (8, 9; 10, 11) diametrically opposed in pairs and offset by 90°, two opposite grooves serve to fix the trunnions (A), and at least one of the other two grooves being equipped with a device for detecting the position of the piston in the cylinder body.

## Patentansprüche

1. Vorrichtung zum Befestigen eines Zapfens (A) an einem insbesondere pneumatischen Zylinderkörper zwischen zwei Endblöcken des Zylinders, wobei der Zylinderkörper (2) eine zylindrische Innenbohrung für die Gleitbewegung eines Kolbens und an seiner Außenwand mindestens zwei Längsnuten (8, 9, 10, 11) aufweist, welche zur geometrischen Achse des Körpers parallel sind und einander diametral gegenüber liegen, wobei jede Nut einen Querschnitt aufweist, der durch zwei parallele, längsverlaufende Ankopplungsränder teilweise geschlossen ist, **dadurch gekennzeichnet, dass** sie aufweist:
- ein Einsatzstück (L8, L9, L11, L15) mit einer Kufe (P8, P9, P11, P15) mit einem zu einer der Nuten (8, 9, 11, 15) komplementären Querschnitt, um gegen Drehung gesichert gleitend verschiebbar in diese eingesetzt werden zu können, und einer fest mit der Kufe verbundenen Hülse (B), die aus der Nut herausragt,
- und ein mit dem Zapfen (A) versehenes Klemmstück (S), das zur Befestigung auf dem Ansatz (B) geeignet ist,
wobei zusammengehörige Verbindungseinrichtungen (13, 22) zwischen dem Einsatzstück und dem Klemmstück vorgesehen sind, um das Klemmen der Ränder der Nut zwischen der Kufe des Einsatzstücks und dem Klemmstück zu ermöglichen und so den Zapfen und das Einsatzstück in bezug auf den Zylinderkörper zu fixieren.

2. Befestigungsvorrichtung nach Anspruch 1, **dadurch gekennzeichnet, dass** die Hülse (B) des Einsatzstücks eine glatte zylindrische Außenwand und ein axiales Gewindeloch (12) aufweist, dessen Gewinde (13) die Verbindungseinrichtung des Einsatzstücks bildet, während das Klemmstück (S) eine Bohrung (18) aufweist, die auf die Hülse (B) des Einsatzstücks passt und von einer die entsprechende Verbindungseinrichtung des Klemmstücks bildenden Klemmschraube (22) durchquert werden kann, welche in der Lage ist, mit dem Gewindeloch des Einsatzstücks und dem Klemmstück zusammenzuwirken, um die Anordnung an den Rändern der Nut zu fixieren.

3. Befestigungsvorrichtung nach Anspruch 2, **dadurch gekennzeichnet, dass** das Klemmstück (S) einen Basisflansch (17) aufweist, der in der Lage ist, sich auf den Außenrändern der Nut abzustützen.

4. Befestigungsvorrichtung nach Anspruch 3, **dadurch gekennzeichnet, dass** der Zapfen (A) durch eine einstückig mit dem Flansch (17) ausgebildete rotationszylindrische Fläche gebildet ist.

5. Befestigungsvorrichtung nach einem der vorhergehenden Ansprüche, **dadurch gekennzeichnet, dass** die Hülse (B) des Einsatzstücks und das Klemmstück (S) rotationszylindrisch sind.

6. Befestigungsvorrichtung nach einem der vorhergehenden Ansprüche, **dadurch gekennzeichnet, dass** die Nut des Zylinderkörpers eine Nut mit schwalbenschwanzförmigem (8, 16) oder T-förmigem Querschnitt (15) oder eine Doppelnut (9, 10, 11) ist, wobei die Kufe des Einsatzstücks an den Querschnitt der Nut angepasst ist.

7. Zylinder, insbesondere pneumatischer Zylinder, mit oder ohne Stange, der einen Zylinderkörper (2) umfasst, welcher eine zylindrische Innenbohrung (7) und auf seiner Außenwand mindestens zwei zur geometrischen Achse des Körpers parallele und einander diametral gegenüber liegende Längsnuten (8, 9) aufweist, wobei jede Nut einen Querschnitt aufweist, der durch zwei parallele, längsverlaufende Ankopplungsränder teilweise geschlossen ist, wobei der Zylinder mit mindestens zwei einander diametral gegenüber liegenden Zapfen (A) versehen ist, die an dem Körper zwischen den Enden des Körpers befestigt sind, **dadurch gekennzeichnet, dass** die Befestigung jedes Zapfens durch eine Befestigungsvorrichtung (F) nach einem der Ansprüche 1 bis 6 gewährleistet ist.

8. Zylinder nach Anspruch 7, **dadurch gekennzeichnet, dass** er auf der Außenwand vier Nuten (8, 9; 10, 11) aufweist, die einender paarweise diametral gegenüber liegen und um 90° zueinander versetzt sind, wobei zwei einander gegenüber liegende Nuten zur Befestigung der Zapfen (A) dienen, und mindestens eine der beiden anderen Nuten mit einer Vorrichtung zum Erkennen der Position des Kolbens im Zylinderkörper versehen ist.
